# EUROPÄISCHE PATENTSCHRIFT

(11) **EP 0 641 731 B1**
(45) Veröffentlichungstag und Bekanntmachung des Hinweises auf die Patenterteilung: **27.11.1996**
(21) Anmeldenummer: 94112247.5
(22) Anmeldetag: 05.08.1994
(51) Int. Cl.: B65G 69/00

(54) **Dichtung des Spaltes zwischen dem Rand einer Gebäudeöffnung und dem Heck eines andockenden Fahrzeuges**
Sealing of the gap between the edge of an aperture in a building and the rear of a vehicle
Joint pour couvrir la fente entre le bord d'une ouverture d'un bâtiment et l'arrière d'un véhicule

(30) Priorität: 01.09.1993 DE 9313144 U
(43) Veröffentlichungstag der Anmeldung: 08.03.1995
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- EP-A- 0 258 778
- FR-A- 2 510 651
- US-A- 3 528 086

## Beschreibung

Die Erfindung betrifft eine verformbare Dichtung des Spaltes zwischen dem Rand einer Gebäudeöffnung und dem Heck eines andockenden, an diese Öffnung herangefahrenen Fahrzeuges nach dem Gattungsbegriff des 1. Schutzanspruchs (siehe zum Beispiel die FR-A-2510651).

Bei diesen Dichtungen muss die vorne gelegene Schürze bei einer Beaufschlagung durch das Fahrzeug elastisch in Richtung auf das Gebäude nachgeben können. Aus diesen Gründen sind die Schürze bzw. deren Seitenteile seitlich aussen an senkrechten Metallprofilen befestigt, die durch schräge Lenker gehalten sind. Diese Profile dienen auch der Befestigung von Seitenplanen, die mit ihrem vorderen Rand in hinterschnittenen Nuten der Profile und mit ihrem hinteren Rand in hinterschnittenen Nuten von Metallprofilen fixiert sind, welche am Gebäude befestigt sind. Diese Ausbildung hat allerdings den Nachteil, dass bei einer Bewegung der Schürze in Richtung auf das Fahrzeug eine Verzerrung der in der Ansicht rechteckigen Seitenplanen eintreten muss. Um durch die dabei eintretenden Verformungen Beschädigungen auszuschliessen, wurde schon vorgeschlagen, die Seitenplanen am vorderen Rand oben und unten, am hinteren Rand jedoch nur am oberen Ende zu fixieren, um so gebäudeseitig Verschiebebewegungen der Seitenplanenränder zuzulassen.

Diese Problemlösung hat sich bereits bewährt, jedoch ergeben sich dann Schwierigkeiten, wenn die Lenker nicht vom Gebäude aus schräg nach oben, sondern schräg nach unten zeigen. In diesem Falle versagt nämlich die vorerwähnte Anordnung und Fixierung der Seitenplanen.

Der Erfindung liegt die Aufgabe zugrunde, solche Dichtungen der eingangs erwähnten Art zu verbessern, bei denen die der Halterung und Führung der Schürze dienenden Lenker schräg nach unten zeigen, um somit auch bei diesen Dichtungen eine Schonung der Seitenplanen herbeiführen zu können.

Die Aufgabe der Erfindung wird durch die Merkmale des Anspruchs 1 gelöst.

Im Gegensatz zu den vorerwähnten bekannten Dichtungen ist aufgrund der Erfindung vorgesehen, die Seitenplanenränder gebäudeseitig am oberen und unteren Ende und an den vorderen Rändern nur am oberen Ende zu fixieren bzw. in ihren Nuten festzuhalten. Demgemäss kann bei einer rückläufigen Bewegung der Schürze der untere Teil des vorne gelegenen Schürzenrandes eine Längsbewegung in seiner Nut vollziehen bzw. sich nach oben verschieben und nach Abzug des Fahrzeuges wieder nach unten bewegen. Eine so befestigte Seitenplane schliesst unerwünschte Verformungen und einen vorzeitigen Verschleiss auch dann aus, wenn die die erwähnten Lenker nach unten weisen.

Weitere Einzelheiten der Erfindung werden anhand der Zeichnung erläutert, in der ein Ausführungsbeispiel der Erfindung dargestellt ist, Es zeigen :

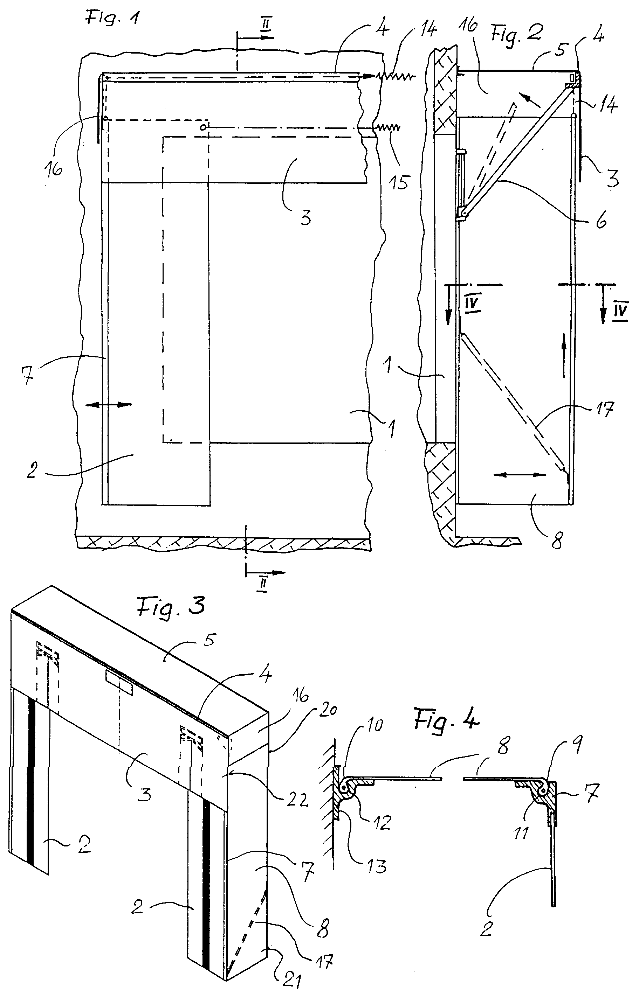

Fig. 1 eine verformbare Dichtung der eingangs genannten Art in der Teilansicht,
Fig. 2 einen Schnitt nach der Linie II - II von Fig. 1,
Fig. 3 die Dichtung gemäss Fig. 1 und 2 in schaubildlicher Darstellung und
Fig. 4 einen Schnitt nach der Linie IV - IV von Fig. 2.

Im Abstand vor einem Gebäude mit einer Gebäudeöffnung 1 befindet sich eine verformbare Schürze, die wie alle übrigen Planen der Dichtung aus gummiertem Gewebe od. dgl. besteht und von zu beiden Seiten der Gebäudeöffnung 1 befindlichen senkrechten Streifen 2 und im oberen Bereich von einem Querteil 3 gebildet ist. Dieses Querteil 3 ist gardinenartig aufgehängt an einem waagerechten Metallprofil 4, von dem aus sich zum Gebäude hin eine Dachplane 5 erstreckt.

Das Querteil 3 wird von einer schrägen, verschwenkbaren Stütze 6 getragen, die ein Anheben des Querteils 3 ermöglicht, wenn dies beim Andocken von Fahrzeugen z.B. von Sattelschleppern erforderlich ist.

Die seitlich aussen gelegenen Ränder der Streifen 2 sind an senkrechten Metallprofilen 7 befestigt, von denen sich zum Gebäude hin Seitenplanen 8 erstrecken. Beide Ränder 9, 10 der Seitenplanen 8 sind verdickt und in hinterschnittenen Nuten 11 der Metallprofile 7 bzw. gebäudeseitig in Nuten 12 gehalten, die ein am Gebäude befestigtes Metallprofil 13 aufweist.

Die beiden Metallprofile 7 sind über elastische Seilzüge 14 am Dachteil der Dichtung bzw. am Metallprofil 4 aufgehängt. Darüber hinaus stehen die inneren, oberen Kanten der Streifen 2 über einen waagerechten elastichen Seilzug 15 in Verbindung. Da die Streifen 2 und die Seitenplanen 8 im Abstand unterhalb der Dachplane 5 enden, ist an den Enden der Dachplane 5 ein Überhang 16 zum Überbrücken des Spaltes vorgesehen.

Um die Streifen 2 bzw. die zugehörigen Metallprofile 7 besser haltern und führen zu können, greifen an ihren unteren Enden schräg nach oben zum Gebäude hin verlaufende Lenker 17 an, die als steife, jedoch verformbare Spiralfedern ausgeführt sein können. Diese Lenker 17 bewirken zudem, dass zwar die Schürze insgesamt in Richtung auf das Gebäude bewegbar ist, wenn sie von einem Fahrzeug beaufschlagt wird, jedoch haben sie zudem die Aufgabe, die Streifen 2 im Ruhezustand der Dichtung in der Stellung gemäss Zeichnung zu halten. Darüber hinaus versteht es sich, dass bei einer Beaufschlagung der Schürze und der damit eintretenden Verschwenkung der Lenker 17 das Profil 7 eine Höhenänderung erfährt, das zu Verformungen der Seitenplanen 8 führen muss. Damit diese Verformungen nicht zu Beschädigungen der Seitenplanen 8 führen können, ist die Verschiebbarkeit der Ränder 9, 10 in den Nuten 11, 12 in besonderer Weise vorgesehen.

Die Ränder 1o sind aus diesen Gründen oben und unten bei 2o und 21 fixiert, also durch Klemmen oder ähnliche Massnahmen festgesetzt. Daher können hier Randverschiebungen nicht eintreten. Am Metallprofil 7 hingegen ist der Rand 9 an seinem oberen Ende bei 22 festgesetzt, während darunter eine mehr oder weniger freie Verschiebbarkeit des Randbereichs zumindest bei Abstandsverringerungen der Schürze gegenüber dem Gebäude gegeben ist. Dies bedeutet, dass die Seitenplanen 8 bei Bewegungen des Metallprofils 7 in Richtung auf das Gebäude Ausweichbewegungen bzw. Verschiebungen ihrer Ränder vollziehen können .

Es sei erwähnt, dass nach einer Randverschiebung der Seitenplanen 8 eien Rücklaufbewegung in die Ursprungsstellung im Regelfalle ohne weiteres eintritt, jedoch liegt es auch im Rahmen der Erfindung, diese Rücklaufverschiebung z.B. durch Federzug zu fördern bzw. herbeizuführen.

## Patentansprüche

1. Verformbare Dichtung des Spaltes zwischen dem Rand einer Gebäudeöffnung (1) und dem Heck eines andockenden Fahrzeuges mit einer verformbaren, bei Beaufschlagung durch das Fahrzeug in Richtung auf das Gebäude elastisch nachgiebig bewegbaren Schürze, deren Seitenstreifen (2) seitlich aussen an senkrechten, von schrägen Lenkern (17) geführten Metallprofilen (7) befestigt sind, von denen aus sich zum Gebäude hin Seitenplanen (8) erstrecken, wobei die beiden verdickten Ränder der Seitenplanen (8) in hinterschnittenen Nuten (11) der Metallprofile (7) bzw. in Nuten (12) von am Gebäude befestigten, weiteren Metallprofilen (13) verschiebbar gelagert, jedoch örtlich durch Fixieren gegen Verschieben gesichert sind, dadurch gekennzeichnet, dass die Lenker (17) vom Gebäude aus schräg nach unten weisen und dass die gebäudeseitig vorgesehenen Ränder (10) insgesamt, z.B. oben und unten, und die vorderen Ränder (9) lediglich im oberen Endbereich gegen Verschieben gesichert sind.

2. Dichtung nach Anspruch 1, dadurch gekennzeichnet, dass auf jeder Seite der Dichtung lediglich ein Lenker (17) vorgesehen ist, der im unteren Endbereich an seinem Metallprofil (7) angreift, das elastisch nachgiebig am Dachteil, insb. an einer Traverse (4) aufgehängt ist, welches zur gardinenartigen Aufhängung eines Querteils (3) der Schürze dient.

3. Dichtung nach Anspruch 2, dadurch gekennzeichnet, dass das Dachteil anhebbar ist.

4. Dichtung nach Anspruch 1, dadurch gekennzeichnet, dass die Lenker (17) elastisch verbiegbar sind.

## Claims

1. Deformable seal for sealing the gap between the edge of a building opening (1) and the rear of a vehicle being positioned thereat, having a deformable apron which is elastically resiliently displaceable towards the building if impinged by the vehicle, the lateral strips (2) of said apron being mounted laterally externally on vertical metal profiles (7), which are guided by inclined guide means (17), lateral covers (8) extending from said metal profiles to the building, the two thickened edges of the lateral covers (8) being displaceably mounted in undercut grooves (11) in the metal profiles (7) and/or in grooves (12) in additional metal profiles (13) mounted on the building, but said edges are prevented from becoming displaced in a localised manner by securement, characterised in that the guide means (17) are orientated inclinedly downwardly from the building, and in that all of the edges (10) provided adjacent the building, e.g. at the upper and lower ends, and only the front edges (9) in the upper end region are prevented from becoming displaced.

2. Seal according to claim 1, characterised in that on each side of the seal, only one guide means (17) is provided, which co-operates in the lower end region with its metal profile (7), which is suspended elastically resiliently from the top portion, more especially a cross-piece member (4), which portion serves to suspend a transverse member (3) of the apron in a curtain-like manner.

3. Seal according to claim 2, characterised in that the top portion is raisable.

4. Seal according to claim 1, characterised in that the guide means (17) are elastically bendable.

## Revendications

1. Dispositif d'étanchéité déformable de l'intervalle compris entre le bord d'une baie (1) de bâtiment et l'arrière d'un véhicule automobile accostant, comportant une jupe mobile, qui peut céder élastiquement en direction du bâtiment lorsque le véhicule automobile la soumet à une charge, dont les bandes (2) latérales sont fixées latéralement à l'extérieur à des profilés (7) métalliques verticaux, qui sont guidés par des bras (17) de suspension et à partir desquels des bâches (8) latérales s'étendent en direction du bâtiment, les deux bords épaissis des bâches (8) latérales étant montés de manière à pouvoir être décalés dans des rainures (11) en contre-dépouille des profilés (7) métalliques et dans des rainures (12) d'autres profilés (13) métalliques fixés au bâtiment, mais empêchés localement d'être décalés en raison d'une fixation, caractérisé en ce que les bras (17) de suspension vont du bâtiment en biais vers le bas et en ce que les bords (10) prévus du côté du bâtiment sont empêchés d'être décalés dans l'ensemble, par exemple en haut et en bas, et les bords (9) avant seulement dans la partie d'extrémité supérieure.

2. Dispositif d'étanchéité suivant la revendication 1, caractérisé en ce qu'il n'est prévu de chaque côté du dispositif d'étanchéité qu'un seul bras (17) de suspension qui attaque dans la région d'extrémité inférieure son profilé (7) métallique qui est suspendu en pouvant céder élastiquement à une pièce de toit, notamment à une traverse (4), qui sert à suspendre à la façon d'un rideau une partie (3) transversale de la jupe.

3. Dispositif d'étanchéité suivant la revendication 2, caractérisé en ce que la pièce de toit peut être soulevée.

4. Dispositif d'étanchéité suivant la revendication 1, caractérisé en ce que les bras (17) de suspension sont déformables élastiquement.
